Europäisches Patentamt

European Patent Office

Office européen des brevets

(11) Publication number: **0 036 235**
**A1**

# EUROPEAN PATENT APPLICATION

(21) Application number: **81200282.2**

(22) Date of filing: **13.03.81**

(51) Int. Cl.³: **B 01 D 1/28**
**B 01 D 1/26, A 23 C 1/12**

(30) Priority: **17.03.80 NL 8001576**

(43) Date of publication of application:
**23.09.81 Bulletin 81/38**

(84) Designated Contracting States:
**AT BE CH DE FR GB IT LI LU NL SE**

(71) Applicant: STORK FRIESLAND B.V.
84 Stationsweg
NL-8401 DT Gorredijk(NL)

(72) Inventor: Eversdijk, Bastiaan Pieter
46 W. Wissestraat
NL-8401 RE Gorredijk(NL)

(74) Representative: Mathol, Heimen et al,
EXTERPATENT 3 & 4 Willem Witsenplein
NL-2596 BK The Hague(NL)

(54) Method and plant for the evaporation of a liquid solution thereby using mechanical compression.

(57) A liquid solution is passed through a multi-stage evaporation plant, while using recirculated vapour fed through a mechanical compressor (42) for increasing its pressure and temperature. The plant comprises a number of evaporators (37, 38, 39) connected in series and being split up into a plurality of groups (C,B and A) with a decreasing number of evaporators—as seen in the flow direction—, the vapour being fed in parallel streams through said groups.

EP 0 036 235 A1

FIG. 4.

- 1 -

Method and plant for the evaporation of a liquid solution
thereby using mechanical compression,

The invention relates to a metod of condensing a liquid
solution in a plant adapted to evaporation, more particularly
a multi-stage plant adapted to an evaporation of milk, a mechanical compression of the treatment vapour being carried out, so as to
have the former regain its initial temperature and pressure, whereby the latent heat of the vapour released from a previous stage
is used in the subsequent stage with a lower boiling point of the
product, so as to sucessively increase the dry substance contents
of the product by means of evaporation.

It is known in the art, that the use of a single-stage compressor
in a similar method will cause the raise in pressure and temperature
to be restricted, so that in multi-stage evaporators the heating
surface has to be enlarged. Consequently the liquid load on the
pipes will become insufficient so that dry boiling will occur in
some parts of the plant, whilst a pollution (incrustation) cannot
possibly be avoided. These phenomena will especially occur in the
last stages whereat, due to a higher dry substance contents, the
heat transfer coefficient will be decreased, so that a greater
heating surface will be required.

Efforts have been made to overcome this problem by dividing
(splitting up) the pipes into a number of sections (so-called
passes) and by having these sections pass the product, connected
in series. This causes the liquid load on the pipe(s) to be increased in such a manner, that any danger of dry boiling is
restricted to a minimum. Said division substantially increases,
however, the costs of instalment, due to the necessity of the
presence of additional housings, pumps, lines and drop separators.
Although a higher initial level of temperature and pressure
of the treatment vapour can actually be obtained by using a
multi-stage compressor, the costs of instalment will be considerably increased by the latter measure.

The invention aims to provide a method which does not require
- a division into stages, but which method nevertheless, provides
a sufficiently great difference in temperature between the condensing treatment vapour on the one hand and the boiling point
of the product on the other hand, dependent upon the heat transfer
coefficient and so upon the dry substance contents of the product
flowing through the respective stage.

This object is attained in accordance with the invention in that
the evaporators connected in series and designed for the passage
of the product, are split up into a plurality of groups, while the
lines for the incoming and outgoing vapour per group are connected in parallel with the outlet and inlet line of the mechanical
compressor.

Due to these measures the necessity for dividing the stages can
be avoided and the total difference in temperature which the compressor is able to generate, is used in the relative groups.

The method in accordance with the invention is preferably
carried out in such a manner that - as seen in the direction of
the product flow - groups are formed comprising a decreasing
number of evaporators, the last group consisting of a single
evaporator. Said latter evaporator through which the product
having the greatest dry substance contents flows, can be so
installed in the vapour circuit, that the maximally available
difference in temperature between the condensing vapour on the
one hand and the liquid solution on the other hand, is used in
said evaporator.

In accordance with the invention the liquid solution is initially
fed to the group having the greatest number of evaporators, said
solution sucessively passing groups possessing a decreasing number
of evaporators, the last passage being accomplished through the
evaporator being installed between the inlet and outlet vapour
line of the compressor. The previous groups of stages (evaporators) through which the respective product has flown may be composed such, that the difference in temperature available per stage becomes as favourable as possible with respect to the heat transfer coefficient and thus with respect to the dry substance contents of the product flowing therethrough. The latter measure avoids a splitting up of the respective stages.

The invention is likewise embodied in a multi-stage plant for evaporating a liquid solution, while applying the method as described hereinbefore, said plant comprising a plurality of evaporating stages, each consisting of an evaportator and a drop separator, lines and pumps for conveying the liquid solution through the plant, lines for the treatment vapour and a mechanical compressor, as well as lines for a discharge of condensate.

In accordance with the invention, the liquid solution in said plant passes through the evaporating stages in series, said stages being divided into a plurality of groups comprising a decreasing number of evaporating stages, while the treatment vapour being supplied and discharged per group, is connected in parallel with the outlet and inlet lines of the mechanical compressor.

It should be noted that the use of mechanical compression of exhaust vapour from an evaporating plant has been applied previously, however, without the beneficial effect as provided in the combination of features according to the present invention. So as to elucidate the latter the invention is presently illustrated with respect to the accompanying drawings which first show the state of the art and finally two embodiments of a plant in which the novel method according to the invention is carried out.

Figure 1 diagrammatically shows a single-stage
evaporator with mechanical compression;

Figure 2 is a dual-stage evaporator, likewise
with mechanical compression;

Fig. 3 shows a single stage of an evaporating
plant, which stage has been divided both internally as externally;

Figure 4 shows the principle of the arrangement
in accordance with the invention;

Figure 5 is a diagrammatical embodiment of a
plant being built up from three evaporators.

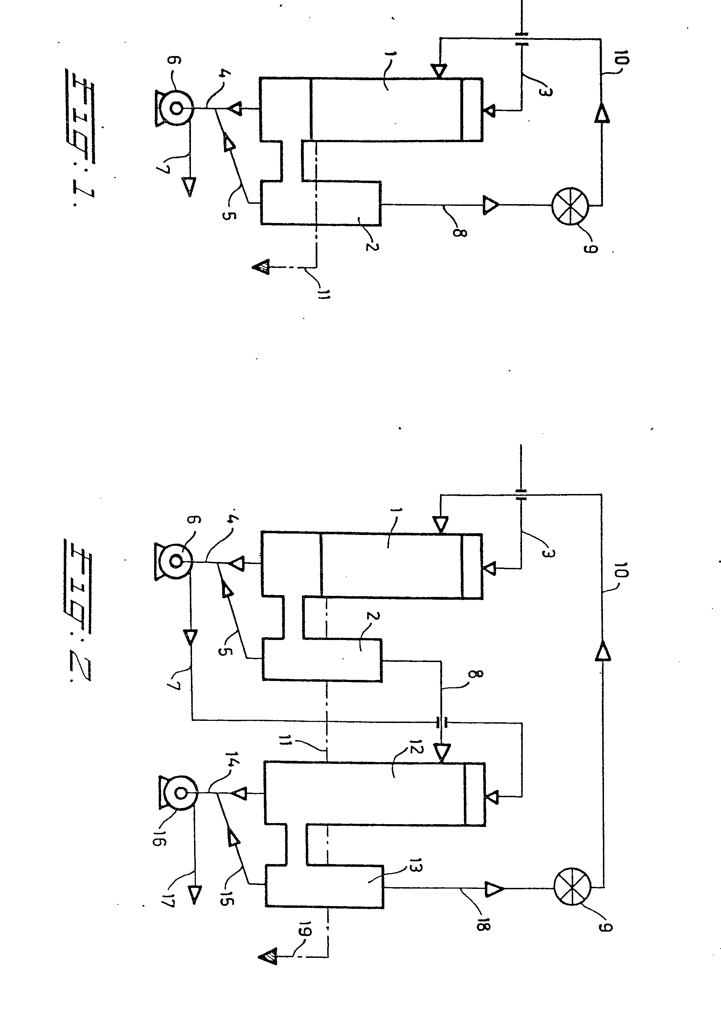

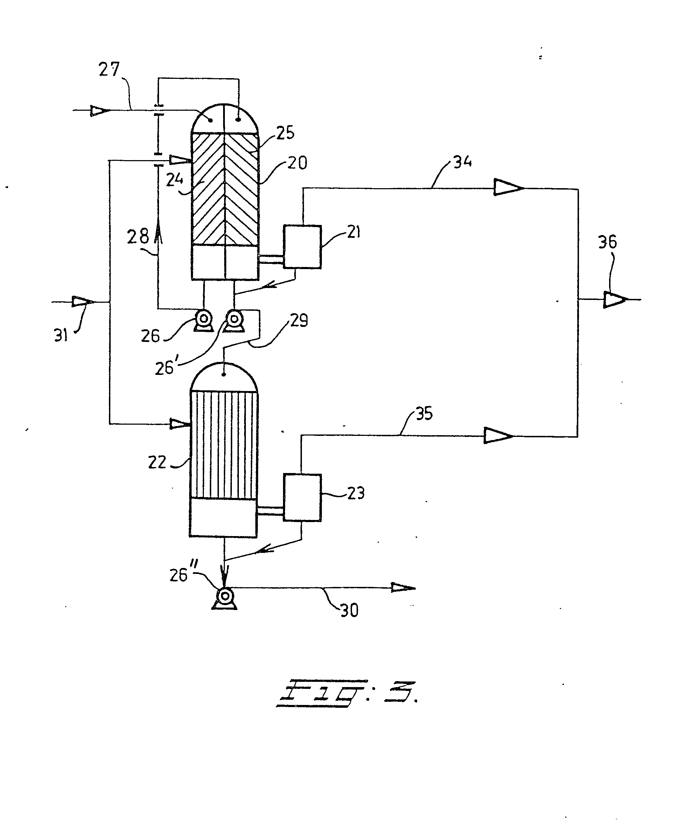

Figures 1 and 2 show the basic oncept of a single-stage and
a dual-stage evaporator respectively, having mechanical compression . In the case that the latter two evaporators are
destined to remove Q-ton water/hrs. from an identical product
flow, a difference in temperature of $\Delta T^{o}C$ between the inlet and
outlet vapour of the compressor occurring, said compressor requiring for said vapour a specific capacity of $\varepsilon$ kW/ton/$^{o}$C of
vapour, it appears that the following compression power is
required:

Single-stage evaporator: Q. $\Delta$ T. $\varepsilon$ kW/hrs.,
Dual-stage evaporator : $\frac{1}{2}$Q. $\Delta$ T. $\varepsilon$ kW/Hrs.

In the single-stage and dual-stage evaporator of figures 1 and 2 liquid solution to be condensed is supplied through a line 3 and discharged through a line 4 after having traversed the evaporator 1. The liquid caught in a drop separator 2 is, via a line 5,combined with the liquid from line 4 and flows towards a pump 6 which discharges the condensed liquid via a line 7 towards anoth-er location in the single-stage evaporator or towards the evaporator 12 of the subsequent stage of the dual-stage plant. In the single-stage evaporator of figure 1 the vapour being released from the drop separator is via a line 8, conveyed to a compressor 9. The vapour being increased in temperature and pressure by said compressor 9, is fed back to the evaporator of the first stage via line 10. The condensate formed in the evapororator 1 is discharged via a line 11.

In the dual-stage evaporator of figure 2 the vapour being discharged from the drop separator 2 is via line 8, fed to the evaporator 12 of the second stage. The vapour being released from the liquid solution is fed to the compressor 9 via the drop separator 13 and line 18. The condensate formed in the evaporator 1 is either discharged through line 11 or used in evaporator 12 and is then, together with the condensate formed in the latter evaporator, discharged via line 19.

Although the dual-stage evaporator of figure 2 presents considarable advantages as compared with the single-stage evaporator of figure 1, especially with a view to power consumption, the inconvenience of said dual-stage evaporator consists in that presently only half the difference in temperature, to wit $\frac{1}{2}\Delta T^{o}C$ between the condensing vapour and the boiling liquid product is available in each stage. Consequently the surface required for the heat transfer has to be twice as large as in a single-stage evaporator. From this it follows that the costs of the plant of figure 2 are substantially higher. Since furthermore the heat transfer coefficient will decrease in proportion to the increase in dry substance contents of the liquid solution (to wit the product), the later stages of the said evaporator have to be provided with relatively stil more heat transfer surface (= pipes). This implies that when the product passes through pipes being connected in parallel, the liquid load per pipe will decrease to such an extent that a drying out of said pipe may be threatening, which will involve a crustation and a hampering of the cleaning operation which operation will have to be performed much more frequently.

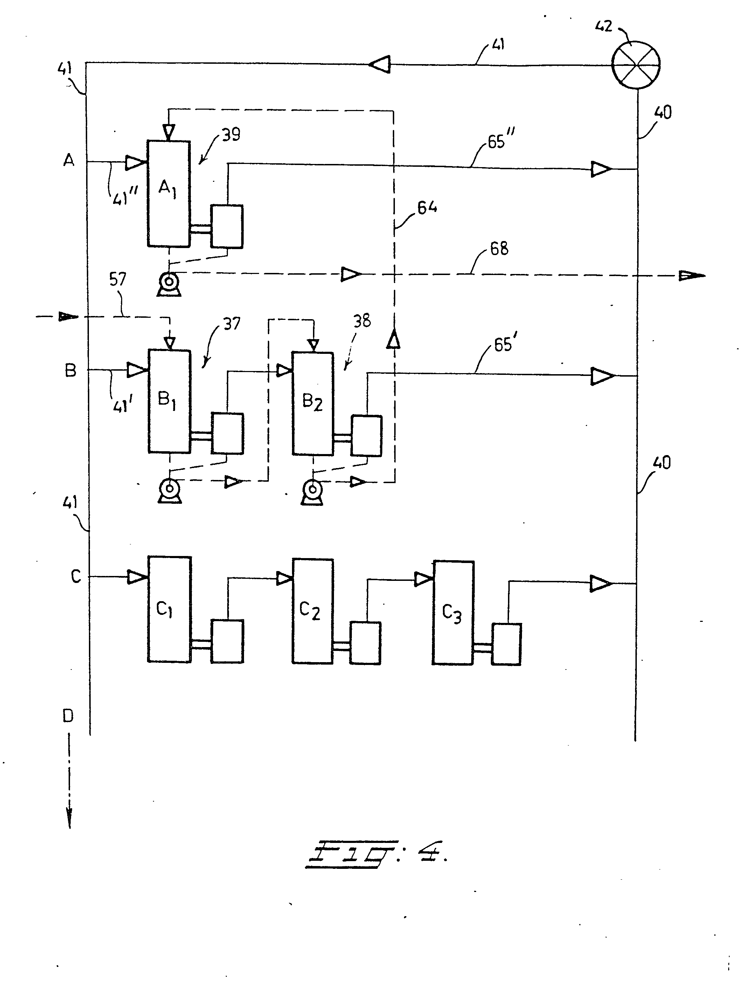

A known method of avoiding the aforementioned problems consists in an increase of the applied difference in temperature Δ T. The latter can be obtained by applying a multi-stage compressor which, however, considerably increases the costs of instalment. Figure 3 shows another possibility which consists in splitting the stages whereby the pipes from a certain stage are divided into a plurality of groups connected in series, through which the liquid solution (the product) is passed. This increases the liquid load per pipe such, that the phenomena of dry boiling and the crustation involved therewith, will be considerably reduced. As can be seen in figure 3, the concerning stage is divided into two sections, built up from an evaporator 20,22 respectively and a drop separator 21,23 respectively. This arrangement is the so-called external division.

Inside the evaporator 20 an internal splitting up has been performed, as the bundle of pipes arranged in said evaporator consists of portiens 24 and 25. The solution flows towards the bundle 24 of pipes via line 27, said solution being subsequently conveyed towards the bundle 25 of pipes by means of a pump 26, via a line 28. Subsequently the condensed liquid solution is pumped away from the latter bundle by means of a pump 26', and flows via line 29, towards the bundle of pipes of the evaporator 22. After having passed said evaporator the solution is further conveyed via line 30, by means of a pump 26".

- 7 -

Figure 3 furthermore shows a vapour feed 31 which is divided towards the two evaporators 20 and 22. The outlet lines 34 and 35 for vapour released from the drop separators 21 and 23, merge together in the outlet line 36. Splitting up the stage as shown in figure 3 will involve considerably higher costs of instalment, in view of the use of additional evaporating sections, pumps, lines and drop separators. As mentioned hereinbefore, the abovedescribed arrangements form part of the known state of the art.

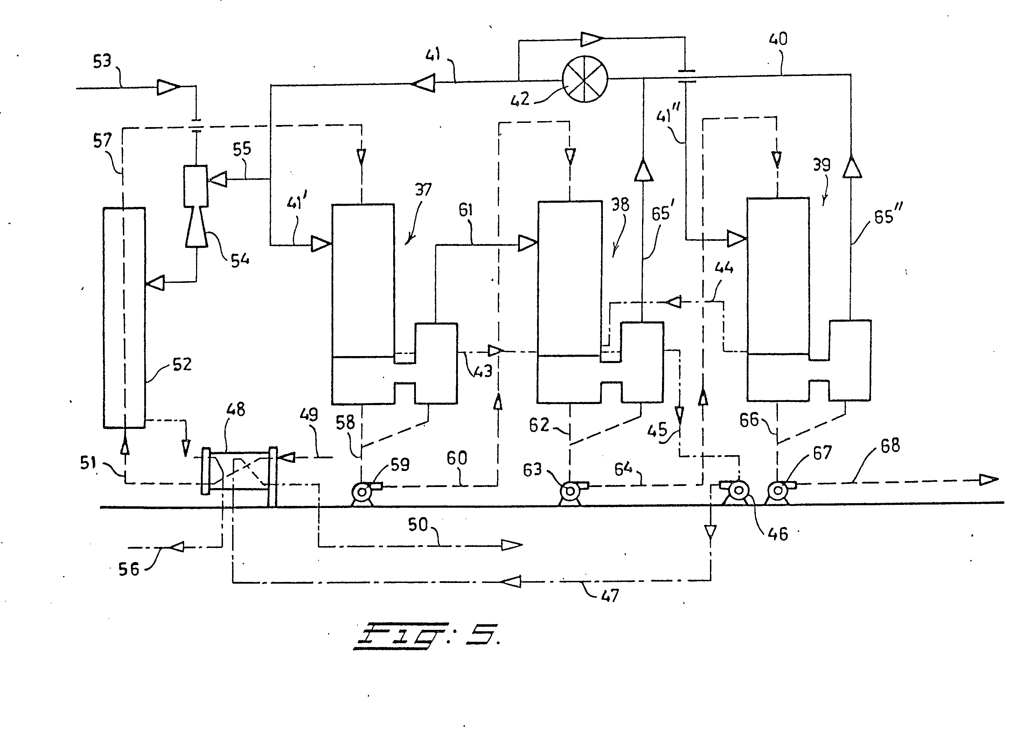

The present invention is illustrated in figures 4 and 5 and avoids the necessity of a division into stages, in that in each respective group the total difference in temperature $\Delta T$, which can be realised in the compressor 9, is used.

Figure 4 shows the circuiting principle of the treatment vapour in a multi-stage plant, whereby the evaporation stages are divided into groups C, B and A, comprising a decreasing number of evaporators and whereby each group. relative to the said treatment vapour, is connected in parallel with the inlet and the outlet lines 40 and 41 of the mechanical compressor 42. The broken line in the figure shows the passage of the product (solution) in a tristage plant, consisting of the group of evaporators 37, 38 and 39. The product is introduced into the first stage 37 via line 57, subsequently flows through the second stage 38 and is hereupon, via line 64, conveyed towards the third stage 39, after the passage of which it is discharged via line 68.

The numerals of figure 4 correspond to those of figure 5.

Due to the aforedescribed manner of vapour circuiting, a multi-stage evaporating plant with mechanical compression can be so designed, that the costs involved with the instalment and the use of energy are as low as possible. Moreover, the application of a mechanical compression in multi-stage evaporators, which is very advantageous from an energetic point of view, can be effected sooner as the relative instalment costs will be much lower in comparison with a thermal compression. This results from the fact that in/the system according to the invention, the necessity of splitting up stages has become superfluous.

The diagrammatical view of figure 4 still shows a group C built up from three evaporators being connected in series. Should the use of the latter be desired, the product inlet line 57 is connected with the device $C_1$, whereas the outlet of $C_3$ is connected with the evaporator 37 of group B. The three groups A, B and C are, connected in parallel, installed between the inlet and outlet lines 40 and 41 of the compressor 42. The latter installation can be extended bij installing a fourth group D, etc.

Figure 5 shows, by way of example, a diagrammatical arrangement of an evaporating plant, which consists of a group of two first evaporators 37 and 38 being connected in series, and a last evaporator 39, whereby the group of two evaporators and the last evaporator are disposed in parallel between the incoming vapour line 40 and the outgoing vapour line 41 of the compressor 42.

The condensate as formed in the first and third evaporator is, via lines 43 and 44, conveyed towards the second evaporator; the condensate gathered at that location which has a relatively high temperature, is, via line 45, pump 46 and line 47, conveyed towards a heat exchanger 48, consisting of plates, in order to increase the temperature of an incoming flow of product which is supplied in counter flow via line 49. Hereupon the cooled down evaporator condensate is discharged via line 50. The preheated product is, via line 51, conveyed towards a pasteurisator 52, which is heated by fresh vapour derived from a line 53 and mixed in a thermocompressor 54, with vapour from the compressor 42 via a branch line 55 from line 41. The condensate discharged from the pasteurisator 52 is used in a separate section of the heat exchanger 48, in order to further heat the supplied product, prior to recirculating the same via line 56 towards the fresh vapour circuit 53. The heat comprised in the condensate is in this manner used as much as possible, prior to having said condensate discharged for a further use.

After having passed the pasteurisation device 52 the product is, via line 57, introduced into the first evaporator and is discharged from the last evaporator via lines 66 and 68, whilst it contains the desired dry substance contents. The example of figure 5 does not show several secondary heat exchangers which may be disposed in the vapour lines and used in order to have the temperature of the incoming product to be evaporated in the relative evaporator, suffciently far exceed the boiling temperature of the product liquid.

- 1 -

CLAIMS:

1.   Method of condensing a liquid solution in a plant for evaporation, more particularly a multi-stage plant adapted to evaporate milk, by means of a mechanical compression of the treatment vapour in order to have the same regain its initial temperature and pressure, whereby the latent heat of the vapour released from a previous stage, is used in a subsequent stage having a lower boiling point of the product, so as to successively increase the dry substance contents of said product by means of evaporation, c h a r a c t e r i s e d   i n   t h a t, the evaporators connected in series and designed for the passage of the product, are split up into a plurality of groups, while the lines for the incoming and outgoing vapour per group, are connected in parallel with the outlet and inlet lines of the mechanical compressor.

2.   Method according to claim 1, c h a r a c t e r i s e d i n   t h a t - as seen in the direction of the product flow - groups are formed, comprising a decreasing numer of evaporators.

3.   Method according to claim 2, c h a r a c t e r i s e d i n   t h a t, the last group consists of one evaporator.

4.   Method according to any one of claims 1 - 3 , c h a r a c t e r i s e d   i n   t h a t, the liquid solution is supplied to the group having the greatest number of evaporators and is subsequently passed through the groups having a steadily deoreasing number of evaporators, the last evaporator which is passed through, being installed between the incoming and outgoing vapour line of the compressor.

5. Plant for the evaporation of a liquid solution, while using the method as claimed in any one of claims 1 - 4, comprising a plurality of evaporating stages C, B and A, each consisting of an evaporator 37, 38, 39 and a drop separator 21, 23, lines and pumps for conveying the liquid solution through the plant, lines for the treatment vapour and a mechanical compressor, as well as lines 47, 50 for the discharge of condensate, c h a r a c t e r i s e d   i n t h a t, the liquid solution passes through the evaporating stages in series , said stages being split up into a plurality of groups , comprising a decreasing number of evaporating stages, while the treatment vapour being supplied and discharged per group, is connected in parallel with the outlet and inlet lines (41, 40) of the mechanical compressor (42).

0036235

FIG.1

FIG.2

*Fig. 3.*

0036235

3/4

FIG. 4.

*Fig. 5.*

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 2 442 886 (GROUPEMENT D'INTERET ECONOMIQUE TEPRAL) <br> * Page 7, lines 9-23; pages 11-13; figure * <br> -- | 1,3,5 | B 01 D 1/28 <br> 1/26 <br> A 23 C 1/12 |
| | CH - A - 192 147 (ESCHER WYSS) <br> * Page 2, left-hand column, lines 17-39; figure * <br> -- | 1,3,5 | |
| | CH - A - 262 259 (ESCHER-WYSS) <br> * Page 2, lines 64-80; figure * <br> -- | 1,3,5 | TECHNICAL FIELDS SEARCHED (Int. Cl.³) <br><br> B 01 D 1/26 <br> 1/28 <br> A 23 C 1/12 <br> C 02 F 1/04 |
| | CH - A - 228 206 (ESCHER WYSS) <br> * Page 2; figure * <br> -- | 1,3,5 | |
| | GB - A - 187 260 (T. RIGBY) <br> * Page 8, lines 96-118; figure * <br> -- | 2 | |
| A | DE - B - 1 142 162 (BASF) | | |
| A | NL - A - 65 15445 (BRONSWERK-FYENOORD) <br><br> ---- | | |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 22-06-1981 | VAN BELLEGHEM |

EPO Form 1503.1   06.78